# EUROPÄISCHE PATENTANMELDUNG

(11) **EP 2 863 055 A1**
(43) Veröffentlichungstag der Anmeldung: **22.04.2015**
(21) Anmeldenummer: 13005000.8
(22) Anmeldetag: 18.10.2013
(51) Int. Cl.: F03G 7/10

(54) **Vorrichtung zur Erzeugung von Elektroenergie mittels eines mechanisch bewegten Antriebssystems**

(71) Anmelder: Dieterle, Frank, 29100 Coin/Malaga (ES); Fisser, Jeroen, 29600 Marbella (ES)
(72) Erfinder: Dieterle, Frank, 29100 Coin/Malaga (ES)
(74) Vertreter: Creutz, Dieter

(57) **Zusammenfassung**

Die Erfindung betrifft eine Vorrichtung zur Erzeugung von Elektroenergie mittels eines mechanisch bewegten Antriebssystems.

Erfindungsgemäß werden, mittels eines elektrisch betriebenen Hydraulikzylinders, Zug- und Schubkräfte über ein Kraftübertragungssystem auf ein um seine Drehachse bewegliches Flügelrad übertragen. Die dort erzeugte Drehbewegung wird auf einen Generator abgeführt, der einerseits elektrische Energie zum Antrieb des Hydraulikzylinders als auch zur externen Nutzung erzeugt.

Mit der erfindungsgemäßen Lösung lässt sich ein kompaktes, kostengünstiges Stromaggregat mit hoher elektrischer Leistungsabgabe herstellen, welches geeignet ist, unabhängig vom bestehenden Stromnetz und ohne zusätzliche kraftschlüssige Verbindung mit dritten Antriebssystemen, die Versorgung mit Elektroenergie zu ermöglichen.

## Beschreibung

Die Erfindung betrifft eine Vorrichtung zur Erzeugung von Elektroenergie mittels eines mechanisch bewegten Antriebssystems.

Es sind zahlreiche Systeme bekannt, die zur Erzeugung elektrischer Energie dienen.

Dazu werden in der Regel immer Kräfte benötigt, die geeignet sind einen Generator anzutreiben, um die mechanische Energie in elektrische Energie umzusetzen.

So sind beispielsweise Vorrichtungen bekannt, bei denen diese durch Gravitation in Rotation gehalten werden und dadurch einen Generator betreiben können.

In der DE 4234842A1 wird ein Energieerzeugungssystem beschrieben, in dem ein Energiegenerator durch einen Motor unter Verwendung von Gravitationsenergie gedreht wird. Die Gravitationsenergie wird mittels einer speziellen Einrichtung, die zwischen den Motor und den Generator geschalten ist, und die aus einer Vielzahl von Gewichten, verstellbar mit gegenseitigen Abständen an einer äußeren Peripherie eines rotierenden Rades angebracht, besteht, erzeugt. Die Gewichte bewirken in unterschiedlichen Stellungen den Gravitationseffekt auszunutzen und die Rotation zu bewirken.

Bei einem weiteren schwerkraftgetrieben Aggregat zur Erzeugung von Strom, wie es in der DE 202008016531 U gezeigt wird, werden am Außenumfang eines Antriebsrades eine gerade Anzahl von Gewichten symmetrisch und außerhalb ihrer Mitte pendelnd aufgehängt. Die Gewichte sind jeweils mit der Antriebswelle des Antriebsmotors und gleichzeitig mit der Hauptantriebswelle des Generators verbunden, wobei nach dem Anschieben durch den Motor die Gewichte durch ihre Schwerkraft pendelnd nach unten fallen und dadurch die Hauptantriebswelle antreiben und so den Generator betreiben.

Derartige Energieerzeugungssysteme ermöglichen zwar die Stromerzeugung mittels Gravitationskräften in unterschiedlicher Weise. Sie sind allerdings kompliziert in ihrem Aufbau und lassen einen robusten Einsatz nicht zu.

Die Erfindung hat die Aufgabe ein kompaktes, kostengünstiges Stromaggregat mit hoher elektrischer Leistungsabgabe zu entwickeln, welches geeignet ist unabhängig vom bestehenden Stromnetz und ohne zusätzliche kraftschlüssige Verbindung mit dritten Antriebssystemen die Versorgung mit Elektroenergie zu ermöglichen.

Die erfindungsgemäße Aufgabe wird mittels einer Kombination aus einem elektrisch betriebenen Hydraulikzylinder, dessen Zug- und Schubkräfte über ein Kraftübertragungssystem auf ein um seine Drehachse bewegliches Flügelrad übertragen werden, gelöst. Die dort erzeugte Drehbewegung wird auf einen Generator abgeführt, der die zum Antrieb des Hydraulikzylinders erforderliche elektrische Energie erzeugt.

Das Kraftübertragungssystem setzt sich aus einem in zwei Abschnitte unterteilten Kraftübertragungsarm und einem Verbindungselement zusammen.

Es hat sich gezeigt, dass das Längenverhältnis der beiden Abschnitte des Kraftübertragungsarm zueinander für die Effizienz der Kraftübertragung von Bedeutung ist, wobei dessen Verhältnis zueinander, jeweils vom Drehpunkt A aus gemessen, der zwischen den Abschnitten des Kraftübertragungsarmes liegt, größer als 1:1 sein sollte.

Am kürzeren Abschnitt des Kraftübertragungsarmes ist ein Gewicht fest und örtlich fixiert mit diesem verbunden. Am längeren Abschnitt des Kraftübertragungsarmes findet die Übertragung der Auf- und Abwärtsbewegung des Kraftübertragungsarmes über einen weiteren Drehpunkt B auf ein Verbindungselement statt. Das so drehbar fest mit diesem verbundene Verbindungsteil setzt dessen Bewegung in eine horizontal geführte Richtung um.

Die erfindungsgemäße Lösung führt dann zu einem besonders effektiven Ergebnis der Kraftübertragung, wenn ein Längenverhältnis der Abschnitte am Kraftübertragungsarm zwischen 3:1 bis 12:1 eingehalten wird.

Überraschenderweise hat sich gezeigt, dass bei einem Längenverhältnis der Abschnitte am Kraftübertragungsarm von 6:1 die erfindungsgemäße Aufgabe am besten lösen kann.

Wesentlich für die erfindungsgemäße Lösung der beschrieben Kombination aus Hydraulikzylinder, Kraftübertragungsarm, Verbindungselement und Flügelelement ist deren Dimensionierung und Ausgestaltung der Einzelelemente zueinander.

So ist das am kürzeren Abschnitt des Kraftübertragungsarmes angebrachte Gewicht so dimensioniert, dass damit das Eigengewicht des längeren Abschnittes des Kraftübertragungsarmes ausgeglichen wird. Dadurch kann der an dieser Stelle erforderliche Kraftaufwand für das Heben- und Senken des Kraftübertragungsarmes minimiert werden.

Von wesentlicher Bedeutung im Gesamtsystem ist der Hydraulikzylinder anzusehen. Dieser ist einerseits fest, unlösbar über den Drehpunkt D an der Grundplatte verbunden, andererseits fest, unlösbar über den Drehpunkt E am kürzeren Abschnitt des Kraftübertragungsarmes.

Der Hydraulikzylinder wird in der Startphase elektrisch von einem Notstromaggregat in Bewegung gesetzt. Nach dem Erreichen der Betriebsphase des Antriebsystems wird das Notstromaggregat elektrisch getrennt, so dass der elektrische Antrieb des Hydraulikzylinders nunmehr über den Generator erfolgen kann.

Der auf diese Weise elektrisch betriebene Hydraulikzylinder ermöglicht, dass die am Hydraulikzylinder entstehenden Zug- und Schubkräfte auf den Kraftübertragungsarm gelenkt werden, der diesen in senkrechter Bewegung nach oben schiebt und nach unten zieht.

Die erzeugten Auf -und Abwärtsbewegungen werden über den längeren Abschnitt des Kraftübertragungsarmes im Verhältnis der Längen der Abschnitte zueinander umgesetzt.

Mittels der über einem Drehpunkt vom längeren Abschnitt des Kraftübertragungsarmes auf ein Verbindungselement übertragenen senkrechten Bewegungen lässt sich ein über einen weiteren Drehpunkt zwischen Verbindungselement und Flügelrad die Eine wirkungsvoll im Gesamtsystem Hydraulikzylinder / Kraftübertragungssystem/ Verbindungselement/ Flügelrad abgestimmte Drehbewegung des Flügelrades ermöglicht es den "oberen Totpunkt" zu überwinden und der Art auszunutzend, die Auf-und Abwärtsbewegung energetisch effektiv für das Gesamtsystem zu führen.

Ein sehr wichtiger Aspekt bei der Konstruktion liegt in der schweren Ausführung der Getrieberäder und der angebrachten Gewichte an den Enden der Flügelräder. Diese schwere Ausführung verleiht jedem einzelnen Rad die Funktion eines Schwungrades, diese speichern Energie und stellen sie am oberen und unterem Totpunkt des Antriebsarmes zur Verfügung.

Somit ist eine reibungslose Fortsetzung der Drehbewegung für die gesamte Anlage, ohne Stocken, gewährleistet

Es hat sich gezeigt, dass eine besonders günstige Lösung erreicht wird, wenn an beiden Enden des Flügelrades jeweils ortsfest fest verbunden, zwei gleich groß dimensionierte Gewichte angebracht sind.

Eine weitere vorteilhafte erfindungsgemäße Ausgestaltung besteht auch darin, wenn das Flügelrad, welches fest über eine Drehachse verbunden ist, über ein Kreuzgelenk an der Drehachse angreift. Über eine Welle und ein auf die Drehbewegung abgestimmtes Getriebe wird die so am Flügelrad erzeugte Drehbeweg in elektrischer Energie umgesetzt.

Eine besonders bevorzugten Ausführungsform der erfindungsgemäß vorgeschlagenen Lösung wird erreicht, wenn das Antriebsystem, aus Hydraulikzylinder, Kraftübertragungsarm, Verbindungselement und Flügelrad, aus zwei Kraftübertragungsarmen, die parallel zueinander, über einen Verbindungssteg fest miteinander verbunden, besteht.

Dabei sind jeweils am längeren Abschnitt der beiden Kraftübertragungsarme, über e Drehpunkte, zwei parallel zueinander angeordnete Verbindungselemente angebracht, die wiederum über zwei weitere Drehpunkte mit zwei parallel zueinander angeordneten und fest miteinander gekoppelten Flügelrädern verbunden sind.

Es hat sich gezeigt, dass eine solche Anordnung des Antriebsystems bevorzugt geeignet ist, eine deutlich größere Menge elektrischer Energie am Generator zu erzeugen, als dies bei einer einfachen Anordnung des Antriebsystems möglich ist.

Beide vorgeschlagene Ausführungen des Antriebsystems haben ihre Berechtigung, da in beiden Fällen auf den Anwender abgestimmte Lösungen realisiert werden können. In beiden Fällen lassen sich kompakt und kostengünstig gestaltete Antriebssysteme zur Erzeugung elektrischer Energie schaffen, die unabhängig von der Energiezufuhr von außen, deren Einsatz ermöglichen.

Entscheidend für die erfinderische Lösung ist, dass die beschriebene Kombination aus mehreren Elementen einen Überschuss elektrischer Energie liefert. Sowohl in der Phase der Inbetriebnahme mittels eines Notstromaggregates als auch in der Betriebsphase wird elektrische Energie in das System eingespeist, um den Hydraulikzylinder in Bewegung zu setzen, d.h. die Schubstangen jeweils nach oben zu drücken und nach unten zu ziehen. Damit wird das System aus Kraftübertragungsarm und Flügelrad in die entsprechenden Bewegungsebenen versetzt.

Zwischen der eingespeisten elektrischen Energie und der am Generator abgenommenen elektrischen Energie liegt, je nach Ausgestaltung der Anlage, ein Überschuss von ca. 90- 95 % erzeugter E- Energie, der zur Fremdnutzung zur Verfügung steht. So verbraucht der Hydraulikzylinder beispielsweise 1,5 kW, erzeugt werden aber ca. 100 bis 120 kW.

Die Erfindung wird nachfolgend an mehreren Ausführungsbeispielen, die in Zeichnungen wiedergegeben sind, näher erläutert. Darin bedeuten:
- (1): Kraftübertragungssystem
- (2): Kraftübertragungsarm mit Abschnitt 2 a und 2b
- (3): Hydraulikzylinder
- (3a): Hydraulikpumpe
- (4): Gewicht am Kraftübertragungsarm (2b)
- (5): Flügelrad
- (6): Verbindungselement
- (7): Gewicht am Flügelrad (5)
- (8): Generator
- (9): Drehpunkt A
- (10): Drehpunkt B Kraftübertragungsarm (2a) / Verbindungselement (6)
- (11): Drehpunkt C Verbindungselement (6) / Flügelrad (5)
- (12): Drehpunkt D Hydraulikzylinder (3) / Grundplatte (15)
- (13): Drehpunkt E Hydraulikzylinder (3) / Kraftübertragungsarm (2b)
- (14): Drehachse
- (15): Grundplatte
- (16): Notstromaggregat
- (17): Welle
- (18): Kreuzgelenk
- (19): Getriebe
- (20): Welle Generator (8) / Getriebe (19)
- (21): Verbindungssteg

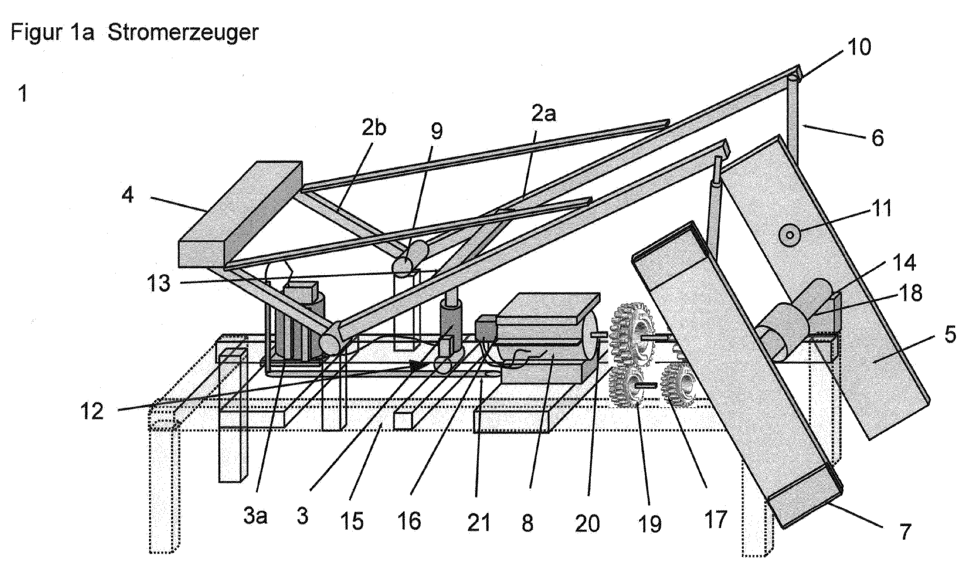

**Fig. 1a****:** zeigt die Ausführungsform des Antriebssystems des Stromerzeugers, bei dem das Kraftübertragungssystem (1) im Wesentlichen aus dem Hydraulikzylinder (3), dem Kraftübertragungsarm (2), dem Verbindungselement (6) und dem Flügelrad (5) und dessen Kopplung an den Generator (8), besteht.

In dieser Variante werden ein Hydraulikzylinder, zwei Kraftübertragungsarme, zwei Verbindungselemente und zwei Flügelrödern eingesetzt.

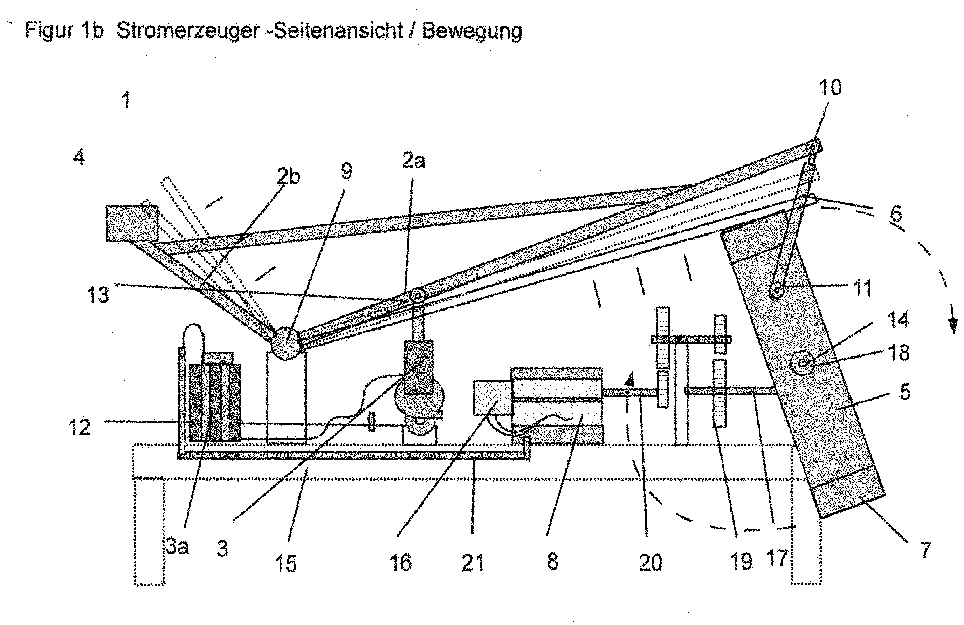

**Fig.1b****:** zeigt die Ausführungsform des Antriebssystems in seiner Seitenansicht und in einer Bewegungsdarstellung.

Hierbei lässt sich die Auf- und Abwärtsbewegung der Kraftübertragungsarme (2a und 2b) und deren Übertragung der Bewegung über die Verbindungselemente (6) auf zwei Flügelräder (5) zeigen. Die entstehende Drehbewegung lässt sich vorteilhafterweise mittels Gewichten (7) an den Flügelrädern (5) verstärken.

Beide Darstellungen machen deutlich, dass die so erzeugte Bewegungsenergie kraftschlüssig über ein Getriebe (19) direkt auf den Generator (8) abgeführt wird.

Von besonderer Bedeutung ist zudem der Einsatz eines weiteren Gewichtes (4) am Kraftübertragungsarm (2a). Es hat sich gezeigt, dass mittels dieses Gewichtes das Eigengewicht des Kraftübertragungsarmes (2a) so ausgeglichen wird, dass zusätzliche Antriebskräfte vermieden werden können. Die Zug- und Schubkräfte des elektrisch angetriebenen Hydraulikzylinders (3) können so auf ein Mindestmaß reduziert werden.

Anlagen mit doppelter Ausgestaltung der Kraftübertragungsarme (2), der Verbindungselemente (6) und der Flügelräder (5) erfordern einen höheren Raumbedarf für die Gesamtanlage.

Eine derartig ausgestaltete Ausführungsform des Stromerzeugers ist insbesondere für größere Anlagen gedacht, die einen höheren Energiebedarf realisieren sollen.

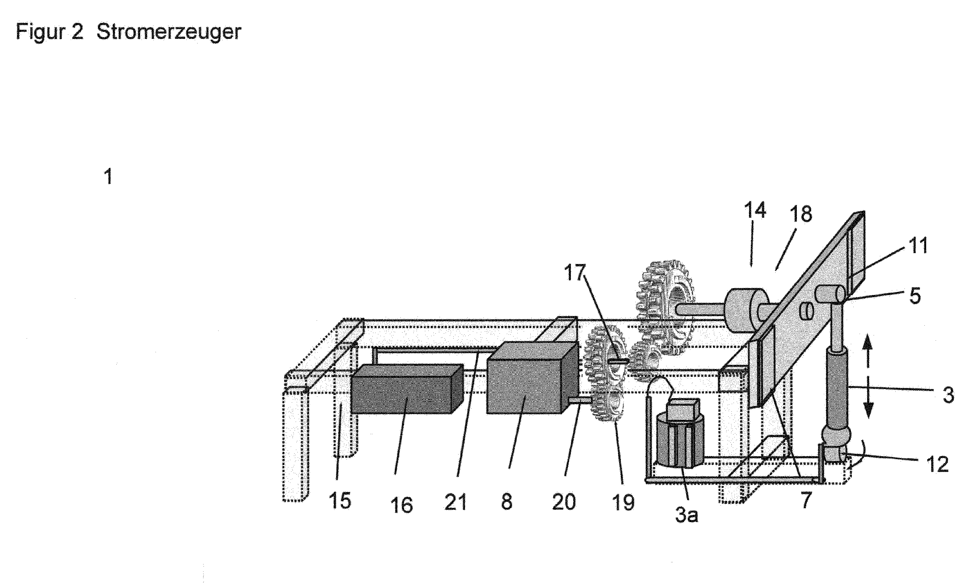

**Fig.2****:** zeigt das Antriebssystem eines Stromerzeugers, der aus einem Hydraulikzylinder (3 und einem Flügelrad (5), welches direkt über das Getriebe (17) mit dem Generator (8) verbunden ist, besteht.

Ein solches Antriebsystem ist im Hinblick auf seine Bauweise sehr kompakt ausführbar. Der elektrisch angetriebene Hydraulikzylinder (3) lenkt dabei seine Auf- und Abwärtsbewegungen unmittelbar über den Drehpunkt C, der sich zwischen dem Verbindungselement (6) und dem Flügelrad (5) befindet, auf das Flügelrad (5) ab. Die so erzeugte Drehbewegung wird über das Kreuzgelenk (18) und die Drehachse (14) auf das Getriebe (19) weitergeleitet, so dass der Generator (8) in Bewegung gesetzt werden kann.

Die kompakte Bauweise ermöglicht den Einsatz in kleinen Stromerzeugern, deren Leistung allerdings geringer ausfällt.

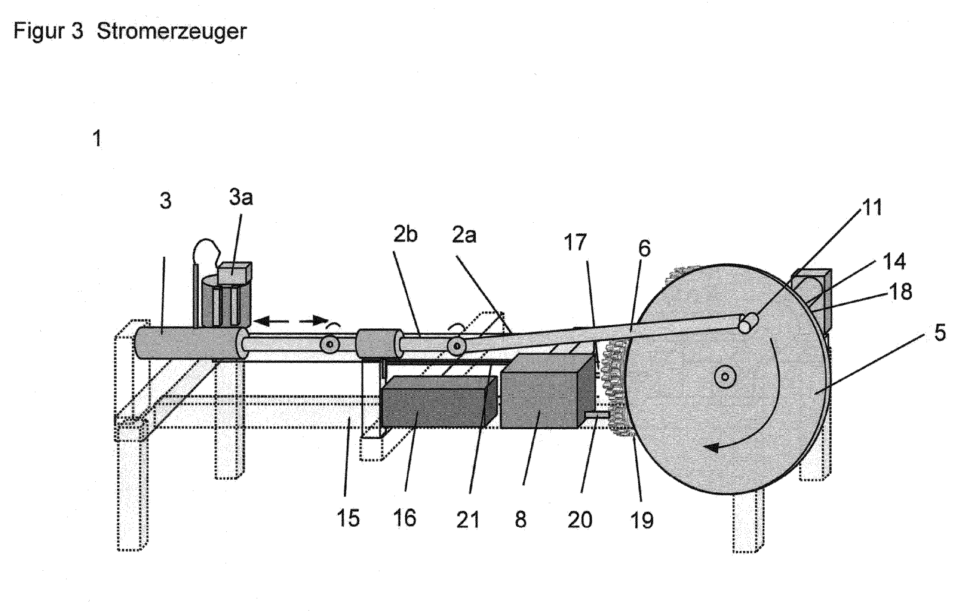

**Fig.3****:** zeigt eine weitere Ausführungsform des Stromerzeugers, die ebenfalls einen geringen Raumbedarf erfordert und somit insbesondere an Stellen zum Einsatz kommen kann, die mit größeren Anlagen nicht bedient werden können.

Es hat sich gezeigt, dass das Antriebssystem auch mit einer gänzlich anderen Einbaulage des Hydraulikzylinders (3) wirkungsvoll arbeiten kann. Dazu werden die Kraftübertragungsarme (2a und 2b) über den Drehpunkt C an das Flügelrad (5), welches kreisförmig ausgebildet ist, direkt angelenkt. Ein derartiger Aufbau des Antriebsystems lässt sich beispielsweise am besten mit dem Schubstangensystem an einer Dampflokomotive vergleichen.

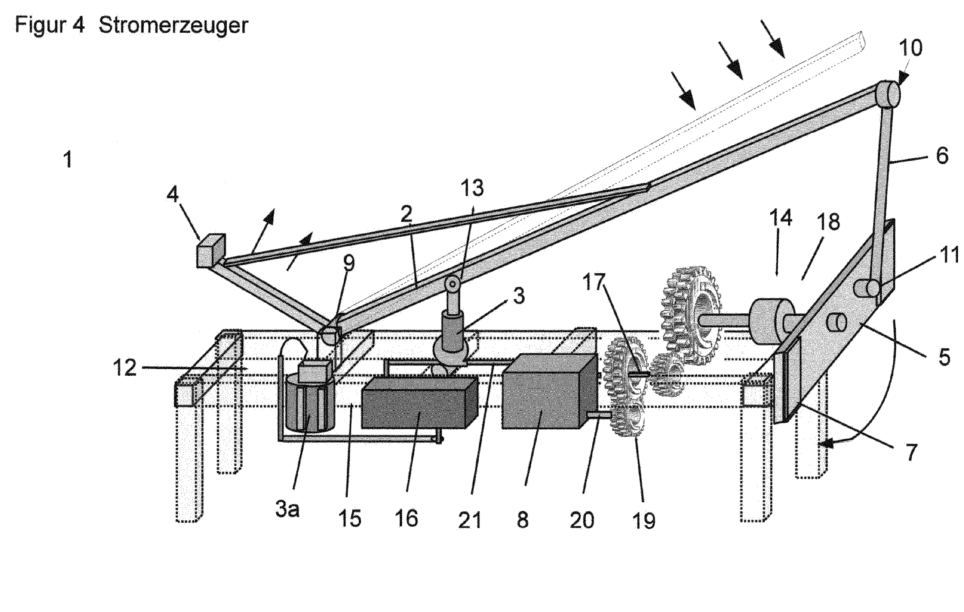

**Fig.4****:** zeigt das Antriebssystem für den Stromerzeuger in seiner grundsätzlichen Ausführungsform, wie in Fig.1 a und 1 b gezeigt.

Es besteht in diese Variante lediglich aus einem Kraftübertragungsarm (2), einem Verbindungselement (6) und einem Flügelrad (5), die von einem Hydraulikzylinder (3), der am Kraftübertragungsarm (2b) angelenkt ist, angetrieben werden.

Diese Ausführungsform lässt sich dann einsetzen, wenn bei mittlerem Platzbedarf genügend elektrische Energie gewonnen werden soll. So lassen sich beispielsweise bei einer solchen Anlage ca. 120 KW erzeugen, wobei ca. 1,5 KW zum Betrieb der Anlage eingespeist werden müssen.

## Patentansprüche

1. Vorrichtung zur Erzeugung von Elektroenergie mittels eines mechanisch bewegten Antriebssystems, **dadurch gekennzeichnet, dass** Zug- und Schubkräfte eines elektrisch betriebenen Hydraulikzylinders (3) über ein Kraftübertragungssystem (1) auf ein um seine Drehachse (14) bewegliches Flügelrad (5) übertragen werden und die so erzeugte Drehbewegung auf einen Generator (8) abgeführt wird.

2. Vorrichtung zur Erzeugung von Elektroenergie nach Anspruch 1, **dadurch gekennzeichnet, dass** das Kraftübertragungssystem (1) aus einem Verbindungselement (6) und einem in zwei Abschnitte (2a, 2b) unterteilten Kraftübertragungsarm (2) besteht.

3. Vorrichtung zur Erzeugung von Elektroenergie nach Anspruch 1, **dadurch gekennzeichnet, dass** das Längenverhältnis der beiden Abschnitte (2a,2b) zueinander, jeweils vom Drehpunkt A (9) aus, größer 1:1 ist, wobei am kürzeren Abschnitt (2b) des Kraftübertragungsarmes (2) ein Gewicht (4) ortsfest mit diesem verbunden und am längeren Abschnitt (2a) des Kraftübertragungsarmes (2), über den Drehpunkt B (10), das Verbindungselement (6) drehbar fest mit diesem verbunden ist.

4. Vorrichtung zur Erzeugung von Elektroenergie nach Anspruch 1, **dadurch gekennzeichnet, dass** das Längenverhältnis der Abschnitte (2a) zu (2b) am Kraftübertragungsarm (2) zwischen 3:1 bis 12:1 beträgt.

5. Vorrichtung zur Erzeugung von Elektroenergie nach Anspruch 1, **dadurch gekennzeichnet, dass** das Längenverhältnis der Abschnitte (2a) zu (2b) am Kraftübertragungsarm (2) 6:1 beträgt.

6. Vorrichtung zur Erzeugung von Elektroenergie nach Anspruch 1, **dadurch gekennzeichnet, dass** das am kürzeren Abschnitt (2b) des Kraftübertragungsarmes (2) angebrachte Gewicht (4) so dimensioniert ist, dass damit das Eigengewicht des längeren Abschnittes (2a) des Kraftübertragungsarmes (2) ausgeglichen wird.

7. Vorrichtung zur Erzeugung von Elektroenergie nach Anspruch 1, **dadurch gekennzeichnet, dass** der Hydraulikzylinder (3) einerseits fest, unlösbar über den Drehpunkt D (12) an der Grundplatte (15), andererseits fest, unlösbar über den Drehpunkt E (13) am Abschnitt (2b) des Kraftübertragungsarmes (2) mit diesem verbunden ist.

8. Vorrichtung zur Erzeugung von Elektroenergie nach Anspruch 1, **dadurch gekennzeichnet, dass** zwei Kraftübertragungsarme (2) parallel zueinander über ein Verbindungssteg (21) fest miteinander verbunden sind, jeweils am längeren Abschnitt (2a) der Kraftübertragungsarme (2) über die Drehpunkte B(10) mit zwei parallel zueinander angeordneten Verbindungselementen (6) und über zwei Drehpunkte C(11) mit zwei parallel zueinander angeordneten und fest miteinander gekoppelten Flügelrädern (5), verbunden sind.

9. Vorrichtung zur Erzeugung von Elektroenergie nach Anspruch 1, **dadurch gekennzeichnet, dass** an beiden Enden der Flügelräder (5), ortsfest fest verbunden, zwei gleich groß dimensionierte Gewichte (7) angeordnet sind.

10. Vorrichtung zur Erzeugung von Elektroenergie nach Anspruch 1, **dadurch gekennzeichnet, dass** die Flügelräder (5) fest über eine Drehachse (14) miteinander verbunden sind und über ein System aus Kreuzgelenk (18), das an der Drehachse (14) angreift, Welle (17), Getriebe (19) und einer Welle (20) die Verbindung zum Generator (8) herstellt.

11. Vorrichtung zur Erzeugung von Elektroenergie nach Anspruch 1, **dadurch gekennzeichnet, dass** der Hydraulikzylinder (3) in der Startphase elektrisch mit einem Notstromaggregat (16) verbunden ist, wobei nach dem Erreichen der Betriebsphase des Antriebsystems das Notstromaggregat (16) wieder getrennt und vom Generator (8) gespeist wird.
